(19) Europäisches Patentamt
European Patent Office
Office européen des brevets

(11) **EP 4 467 844 B1**

(12) **EUROPEAN PATENT SPECIFICATION**

(45) Date of publication and mention
of the grant of the patent:
**09.07.2025 Bulletin 2025/28**

(21) Application number: **23175077.9**

(22) Date of filing: **24.05.2023**

(51) International Patent Classification (IPC):
*F16H 48/36* (2012.01)   *B60K 23/04* (2006.01)
*F16H 48/22* (2006.01)   *B60K 17/16* (2006.01)

(52) Cooperative Patent Classification (CPC):
**F16H 48/36; B60K 23/04; B60K 23/0808;
F16H 48/22;** B60K 17/165; B60K 2023/043;
B60Y 2400/428; F16H 3/04; F16H 2048/366

(54) **DRIVE TRAIN FOR VEHICLE AND VEHICLE**

ANTRIEBSSTRANG FÜR FAHRZEUG UND FAHRZEUG

CHAÎNE CINÉMATIQUE POUR VÉHICULE ET VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**27.11.2024 Bulletin 2024/48**

(73) Proprietor: **Volvo Car Corporation
405 31 Göteborg (SE)**

(72) Inventor: **SILVA PEREIRA, Luiz Filipe
40531 Göteborg (SE)**

(74) Representative: **Maiwald GmbH
Engineering
Elisenhof
Elisenstrasse 3
80335 München (DE)**

(56) References cited:
**EP-A2- 0 844 416         DE-A1- 102008 039 928
DE-A1- 102015 216 668     US-A1- 2005 159 264
US-A1- 2016 263 995       US-A1- 2017 211 676**

**Description**

TECHNICAL FIELD

The present invention relates to a drive train for a vehicle and a vehicle having a drive train.

BACKGROUND ART

In drive trains, the use of torque-vectoring dual clutch (TVDC) systems is commonly known. Known TVDC systems are used for balancing the torque between a left and a right drive shaft of a front axle or a rear axle, in order to provide a better driving performance of the vehicle. The system adjusts a pressure of a clutch in need according to the required torque by controlling a slippage of said clutch. Usually, the clutches of the TVDC systems replace common differential gears. This means the clutches of the TVDC systems are configured to not only balance or distribute torque but also to transfer torque to the respective drive shaft. It is common that the clutches are pressurized and fully closed when driving substantially straight forward. Consequently, at least one clutch starts slipping with even small changes in direction, e.g., small cornering, or small differences on tire pressures between the left and the right side. Therefore, wet clutches, this means, clutches being cooled by a lubricant, are used to prevent overheating of the clutches, particularly early overheating due to said small changes. One further transmission device is disclosed in DE102015216668A1 and a vectoring unit in US 2017/0211676 A1.

SUMMARY

There may, therefore, be a need to provide an improved drive train for a vehicle, which, in particular, allows improving a functional safety level. Further, in particular, the drive train allows using all type of clutches, namely wet and/or dry.

The object of the present invention is solved by the subject-matter of the appended independent claim, wherein further examples are incorporated in the dependent claims.

According to the invention, there is provided a drive train for a vehicle, particularly a motor vehicle. The drive train comprises a split drive axle, an input gear, a differential gear unit, a first transmission unit and a second transmission unit. The split axle has a first drive shaft being couplable to a first wheel, e.g., a left wheel, and a second drive shaft being couplable to a second wheel, e.g., a right wheel. The split axle may be a front axle or a rear axle. The input gear is couplable to a drive unit of the vehicle and provides an input torque to the differential gear unit. The differential gear unit is configured to distribute the input torque on the first drive shaft and the second drive shaft, and comprises a distribution gear box, an internal gear, and an external gear.

According to the invention, the distribution gear box is coupled to the input gear in a torque-transmitting manner and configured to distribute a first portion of the input torque evenly between the first drive shaft and the second drive shaft. The internal gear is coupled to the input gear in a torque-transmitting manner for providing a second portion of the input torque, and the external gear unit is coupled to the input gear in a torque-transmitting manner for providing a third portion of the input torque.

According to the invention, the first transmission unit comprises a first transmission gear assembly and a first clutch, particularly a first friction clutch. The first transmission gear assembly is configured to connect the internal gear of the differential gear unit and the first clutch in a torque-transmitting manner. The first clutch is configured to transmit the second portion of the input torque to the second drive shaft, when being in an at least partly closed state.

According to the invention, the second transmission unit comprises a second transmission gear assembly and a second clutch, particularly a second friction clutch. The second transmission gear assembly is configured to connect the external gear of the differential gear unit and the second clutch in a torque-transmitting manner. The second clutch is configured to transmit the third portion of the input torque to the second drive shaft, when being in an at least partly closed state.

According to the invention, the input torque corresponds to a sum of the first portion of the input torque and the second portion of the input torque or a sum of the first portion of the input torque and the third portion of the input torque.

The split axle defines a front axle or a rear axle of the vehicle having a first drive shaft, e.g., a left drive shaft, and a second drive shaft, e.g., a right drive shaft, being drivable separately, thereby allowing transmitting different torques to the first drive shaft and the second drive shaft. In other words, a split drive axle is required for performing torque-vectoring. The input gear is a torque input member configured to input torque into the differential gear unit. Thus, the input gear may also be referred to as "differential crown gear" or a "differential ring gear".

Thus, the differential gear unit allows balancing the input torque between the first drive shaft and the second drive shaft as needed, e.g., when cornering, thereby improving a driving performance of the vehicle. The drive train allows combining the function of a regular differential with a torque vectoring function, wherein the distribution gear box functions as a regular differential and the first transmission unit and the second transmission unit perform the torque-vectoring. Thus, when no torque-vectoring is needed, e.g., when the vehicle is driving straight or when cornering under low speeds, e.g., when driving in a city, the first transmission unit and the second transmission unit are decoupled from the second drive shaft, i.e., the first clutch and the second clutch are in an open state, and the distribution gear box only distributes the input torque to the first drive shaft and the second drive shaft. When torque-vectoring is needed to improve the driving performance, e.g., when cornering under higher speeds, e.g., on a highway, at least one of the first clutch and the second clutch is in an at least partly closed state. In other words, when torque-vectoring is needed, any of the clutches can slip for a required duration of time for providing the required torque to achieve the desired torque balance.

Further, the distribution gear box allows de-rating in case the clutches fail, e.g., due to overheating. Thus, in case the clutches fail, the distribution gear box allows the vehicle to continue to be driven normally, but without having the torque-vectoring, thereby preventing losing of torque-transfer to the drive shafts. Furthermore, arranging both clutches on only one side of the split axle, allows performing the torque-vectoring function by controlling the torque of only one drive shaft. Additionally, both clutches being arranged on only one drive shaft allows providing separate housing spaces for the clutches and the gear components, i.e., the internal gear, the external gear, the first transmission gear assembly and the second transmission gear assembly. Separate housings allow using different lubricants for the clutches and the gear components. For example, it may be possible to use a first lubricant being optimized for a usage with regard to the gear components and a second lubricant being optimized for a usage with regard to the clutches. Furthermore, separate housings particularly allow using dry clutches instead of wet clutches. Since torque-vectoring is generally needed only for some driving situations, e.g., cornering under high speed, the differential gear unit, particularly the distribution gear box, allows the clutches to be open in most of the driving situations. This means, the clutches are in an open, i.e., disengaged, or inactive state, which does not require cooling of the clutches, thereby allowing the use of dry clutches. Using dry clutches allows improving efficiency by not having a viscous drag torque that exists, when wet clutches are used due to the lubricant, e.g., oil, particularly for cases, in which the clutches are not engaged.

In other words, the drive train allows improving the driving performance of the vehicle, providing an increased functional safety, while providing higher adaptability, particularly with regard to future lubricants. Furthermore, the drive train may provide an increased efficiency, particularly compared to known drive trains with or without torque-vectoring dual clutch.

According to an example, the second portion of the input torque may correspond to a torque in a direction opposite to the direction of first portion of the input torque. In other words, the second portion of the input torque may be a negative torque with regard to the first portion of the input torque. Thus, when the first clutch is at least partly engaged, the second portion of the input torque is transmitted to the second drive shaft. Since the first transmission gear assembly is coupled to the internal gear of the differential gear unit, the torque direction of the first portion of the input torque is reversed, and the second portion of the input torque is opposite to the first portion of the input torque, resulting in that a total torque being transmitted to the second drive shaft is smaller than a total torque being transmitted to the first drive shaft.

In other words, since the first portion of the input torque is distributed evenly to the first drive shaft and the second drive shaft by the distribution gear box, the total torque being transmitted to the first drive shaft may substantially correspond to half of the first portion of the input torque. The total torque being transmitted to the second drive shaft may substantially correspond to half of the first portion of the input torque less the total value of the second portion of the input torque.

According to an example, the third portion of the input torque may correspond to a torque in the same direction as the first portion of the input torque. In other words, the third portion of the input torque may be a positive torque with regard to the first portion of the input torque. Thus, when the second clutch is at least partly engaged, the third portion of the input torque is transmitted to the second drive shaft. Since the second transmission gear assembly is coupled to the external gear of the differential gear unit, the torque direction of the first portion of the input torque is maintained, and the third portion of the input torque is in the same direction as the first portion of the input torque, resulting in that a total torque being transmitted to the second drive shaft is larger than a total torque being transmitted to the first drive shaft.

In other words, since the first portion of the input torque is distributed evenly to the first drive shaft and the second drive shaft by the distribution gear box, the total torque being transmitted to the first drive shaft may substantially correspond to half of the first portion of the input torque. The total torque being transmitted to the second drive shaft may substantially correspond to half of the first portion of the input torque plus the total value of the third portion of the input torque.

According to an example, the drive train may further comprise a housing having a clutch housing space for accommodating the first clutch and the second clutch, and a transmission gear housing space for accommodating the first transmission gear assembly and the second transmission gear assembly, the clutch housing space and the transmission gear housing space being fluidly separated from each other.

Separate housing spaces for the clutches and the gear components, particularly, the internal gear, the external gear, the first transmission gear assembly and the second transmission gear assembly allow using different lubricants for the clutches and the gear components. For example, it may be possible to use a first lubricant being optimized for a usage with regard to the gear components and a second lubricant being optimized for a usage with regard to the clutches. Furthermore, separate housings may particularly allow using dry clutches instead of wet clutches. Since torque-vectoring is generally needed only for some driving situations, e.g., cornering under high speed, the differential gear unit, particularly the distribution gear box, may allow the clutches to be open in most of the driving situations. This means, the clutches may be in an open, i.e., disengaged, or inactive state, which does not require cooling of the clutches, thereby allowing the use of dry clutches.

According to an example, the first clutch and the second clutch may be each a dry clutch. Using dry clutches may allow improving efficiency by not having a viscous drag torque that exists, when wet clutches are used due to the lubricant, e.g., oil, particularly for cases, in which the clutches are not engaged.

According to an example, the first transmission gear assembly may comprise a first input shaft having a first input gear and a second input gear, and a first output shaft having an output gear, wherein the first input gear of the first input shaft may be configured to mesh with the internal gear of the differential gear unit, and the second input gear of the first input shaft may be configured to mesh with the output gear of the first output shaft.

Thus, the first transmission gear assembly may allow transmitting the second portion of the input torque from the internal gear to the first output shaft. The first input shaft and the first output shaft may be arranged in parallel with regard to their axial direction, thereby reducing an axial assembly space.

According to an example, the first clutch may have an input member and an output member, the input member and the output member being configured to be selectively couplable to provide a torque transmission between the input member and the output member in the at least partly closed state of the first clutch and to prevent torque transmission between the input member and the output member in an open state of the first clutch, wherein the input member may be rotatably coupled to the first output shaft, and the output member may be rotatably coupled to the second drive shaft.

Thus, the first clutch may selectively allow transmitting the second portion of the input torque from the first output shaft of the first transmission gear assembly to the second drive shaft.

According to an example, the second transmission gear assembly may comprise a second input shaft having a first input gear and a second input gear, and a second output shaft having an output gear, wherein the first input gear of the second input shaft may be configured to mesh with the external gear of the differential gear unit, and the second input gear of the second input shaft may be configured to mesh with the output gear of the second output shaft.

Thus, the second transmission gear assembly may allow transmitting the third portion of the input torque from the external gear to the second output shaft. The second input shaft and the second output shaft may be arranged in parallel with regard to their axial direction, thereby reducing an axial assembly space.

According to an example, the second clutch may have an input member and an output member, the input member and the output member being configured to be selectively couplable to provide a torque transmission between the input member and the output member in the at least partly closed state of the second clutch and to prevent torque transmission between the input member and the output member in an open state of the second clutch, wherein the input member may be rotatably coupled to the second output shaft, and the output member may be rotatably coupled to the second drive shaft.

Thus, the second clutch may selectively allow transmitting the third portion of the input torque from the second output shaft of the second transmission gear assembly to the second drive shaft.

According to the invention, the internal gear is integrally formed with the input gear.

Thus, the internal gear may rotate with the same rotation speed as the input gear. This means, the absolute value of the second portion of the input torque may depend on a transmission ratio of the internal gear and the first transmission gear assembly.

According to the invention, the external gear is integrally formed with the differential gear box, and may be integrally formed particularly with a housing of the differential gear box. The housing of the differential gear box may be fixed to the input gear, thereby rotating with the speed as the input gear. Consequently, the external gear may rotate with the same speed as the input gear.

According to an example, the first input shaft and the second input shaft may be co-axially arranged to each other and/or the first output shaft and the second output shaft may be co-axially arranged to each other. In other words, the first input shaft and the second input shaft may be concentric with each other and/or the first output shaft and the second output shaft may be concentric with each other. Such arrangement may allow reducing an assembly space of the drive train, particularly in a radial direction. Furthermore, the first output shaft and/or the second output shaft may be co-axially arranged to the second drive shaft, thereby further reducing the assembly space of the drive train, particularly in the radial direction, resulting in a compact assembly of the drive train.

According to an example, the first clutch and the second clutch may be co-axially arranged to each other. In other words, the first clutch and the second clutch may be arranged to each other. In other words, the first clutch and the second clutch may be concentric with each other, thereby reducing an assembly space of the drive train, particularly in an axial direction, resulting in a compact assembly of the drive train, particularly in the axial direction.

According to an example, the second drive shaft may be coupled to the differential gear box via an intermediate shaft portion. The intermediate shaft portion may allow compensating tolerances and/or deviations in distance between the left wheel and the right wheel with regard to the differential gear unit, thereby simplifying the assembly of the differential gear unit and/or reducing an assembly space for the drive train. Furthermore, the intermediate shaft portion may allow being coupled directly with the clutches.

According to a second aspect, there is provided a vehicle comprising a drive train according to the first aspect. In particular, the vehicle may be a battery electric vehicle (BEV) or a hybrid electric vehicle (HEV).

The drive train allows improving the driving performance of the vehicle. Further, the drive train provides an increased functional safety, since the distribution gear box maintain torque transmission to the drive shaft even in case the clutches fail. Additionally, the rive trains allows higher adaptability of the vehicle to future trends, particularly with regard to future lubricants. Furthermore, the drive train may provide an increased efficiency, thereby reducing power consumption of the vehicle.

These and other aspects of the present invention will become apparent from and elucidated with reference to the embodiments described hereinafter.

BRIEF DESCRIPTION OF DRAWINGS

Exemplary examples of the invention will be described in the following with reference to the following drawings.

Fig. 1     shows schematically and exemplarily a drive train according to the present invention in a perspective view.
Fig. 2     shows schematically and exemplarily a cross-sectional view of a drive train that is not a part of the present invention.
Fig. 3     shows schematically and exemplarily a cross-sectional view of a partial section of a drive train according to the present invention.
Fig. 4A    shows schematically and exemplarily a cross-sectional view of a drive train that is not a part of the present invention illustrating a torque transmission operation without torque-vectoring.
Fig. 4B    shows schematically and exemplarily a cross-section view of a drive train that is not a part of the present invention illustrating a torque transmission operation with torque-vectoring.
Fig. 4C    shows schematically and exemplarily a cross-section view of a drive train that is not a part of the present invention illustrating a torque transmission operation with torque-vectoring.

The figures are merely schematic representations and serve only to illustrate examples of the invention. Identical or equivalent elements are in principle provided with the same reference signs.

DESCRIPTION OF EMBODIMENTS

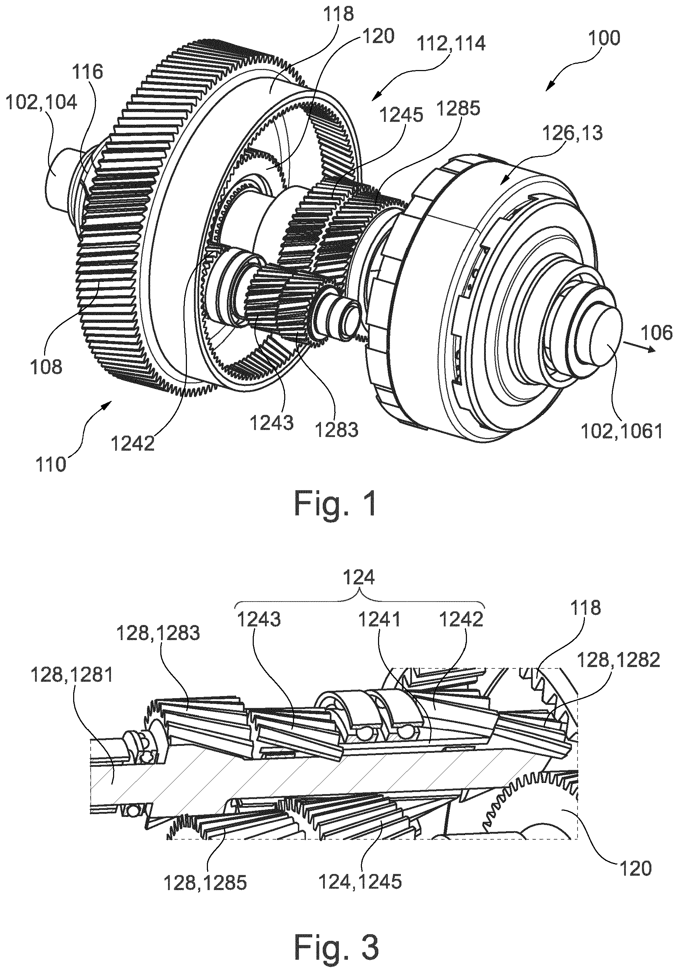

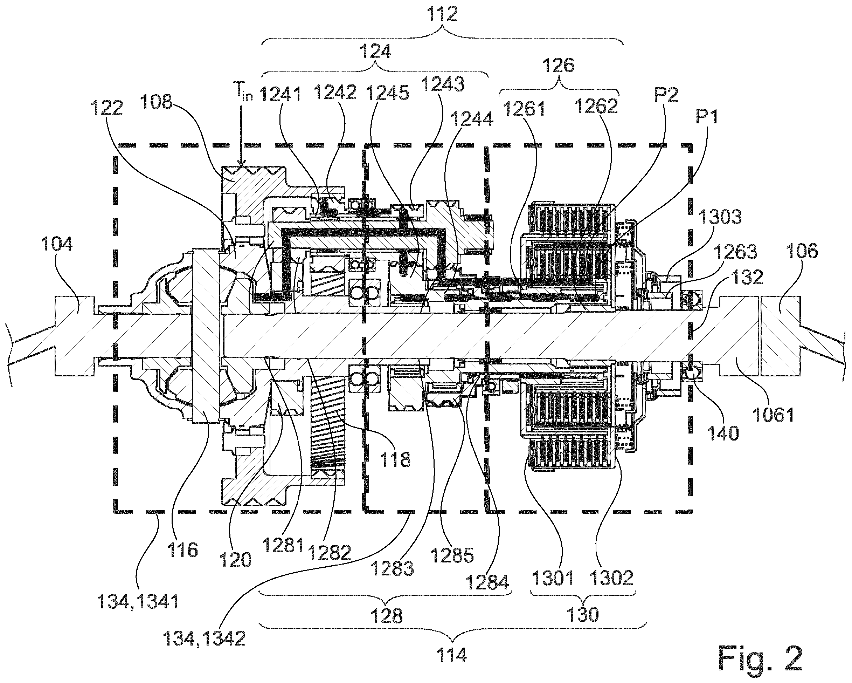

Figures 1 and 2 show schematically and exemplarily a drive train 100 for a vehicle. The drive train 100 comprises a split drive axle 102 having a first drive shaft 104, here a left drive shaft, and a second drive shaft 106 (see Figure 2), here a right drive shaft. Furthermore, the drive train 100 comprises an input gear 108, a differential gear unit 110, a first transmission unit 112, and a second transmission unit 114 (see also Figure 2). It can be seen that the differential gear unit 110 is arranged off-centered with regard to a center of the split drive axle 102. Consequently, a distance from the differential gear unit to a second drive wheel 106 is larger than a distance from the differential gear unit to a first wheel. Thus, in order to have the first drive shaft 104 and the second drive shaft 106 of similar length, the second drive shaft 106 is coupled to the differential gear unit via an intermediate shaft 1061 (see, for example Figure 1).

The input gear 108 is a torque input member, which is couplable to a drive unit of the vehicle (not illustrated) for providing an input torque $T_{in}$ to the differential gear unit 110. The differential gear unit 110 is configured to distribute the input torque $T_{in}$ on the first drive shaft 104 and the second drive shaft 106, wherein the differential gear unit 110 unites a torque-transferring function and a torque-vectoring function. Therefore, the differential gear unit 110 comprises a distribution gear box 116, an internal gear 118 and an external gear 120.

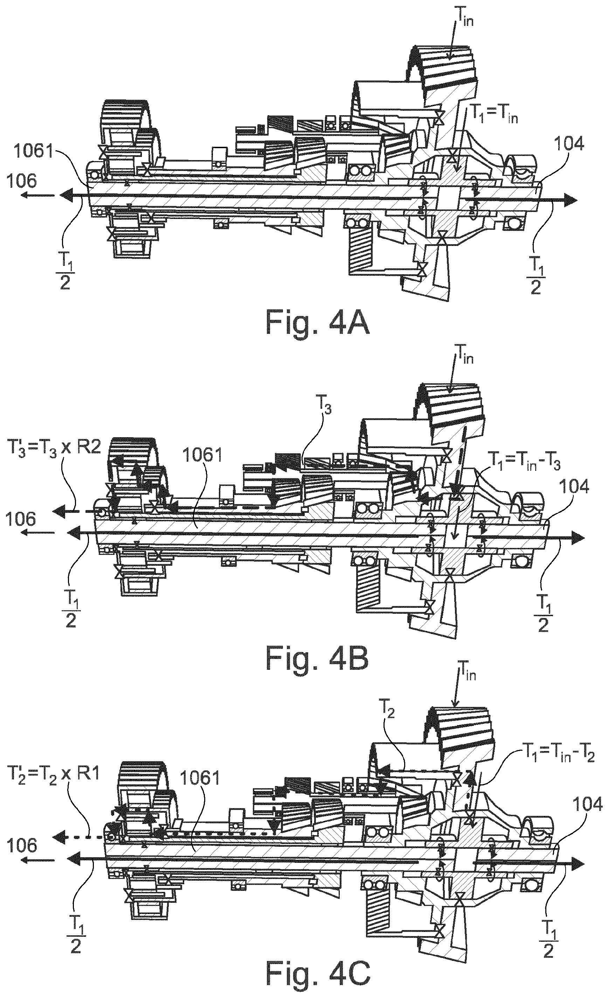

The distribution gear box 116 is coupled to the input gear 108 in torque-transmitting manner and functions as a traditional differential. Thus, the distribution gear box 116 is configured to distribute a first portion $T_1$ of the input torque $T_{in}$ evenly between the first drive shaft 104 and the second drive shaft 106 (see also Figures 4A to 4C). The internal gear 118 is coupled to the input gear 108 in a torque-transmitting manner, e.g. via press fitting the internal gear 118 to the input gear 108, for providing a second portion $T_2$ of the input torque $T_{in}$ (see also Figure 4C). The external gear 120 is coupled to the input gear 108 in a torque-transmitting manner, exemplarily, but not a part of the invention, by being connected to a housing 122 of the distribution gear box 116 through a spline, for providing a third portion $T_3$ of the input torque $T_{in}$ (see also Figure 4B).

The first transmission unit 112 comprises a first transmission gear assembly 124 having a first transmission ratio R1 and a first clutch 126, wherein the first transmission gear assembly 124 connects the internal gear 118 of the differential gear unit 110 and the first clutch 126 in a torque-transmitting manner. The first clutch 126 is configured to transmit a torque

$T_2$' to the second drive shaft 106 (here via the intermediate shaft 1061), when being in an at least partly closed or partly engaged state, wherein the torque $T_2$' substantially corresponds to the second portion $T_2$ of the input torque $T_{in}$ being transmitted by the first transmission gear assembly 124 having the first transmission ratio R1. In particular, the first transmission ratio R1 may be smaller than 1. The first clutch 126 is exemplarily designed as a friction clutch, particularly as a multi-disc clutch. Thus, the internal gear 118 and the first transmission unit 112 form a first vectoring path P1.

The second transmission unit 114 comprises a second transmission gear assembly 128 having a second transmission ratio R2 and a second clutch 130, wherein the second transmission gear assembly 128 connects the external gear 120 of the differential gear unit 110 and the second clutch 130 in a torque-transmitting manner. The second clutch 130 is configured to transmit a torque $T_3$' to the second drive shaft 106 (here via the intermediate shaft 1061), when being in an at least partly closed or partly engaged state, wherein the torque $T_3$' substantially corresponds to the third portion $T_3$ of the input torque $T_{in}$ being transmitted by the second transmission gear assembly 128 having the second transmission ratio R2. In particular, the second transmission ratio R2 may be smaller than 1. The second clutch 130 is exemplarily designed as a friction clutch, particularly as a multi-disc clutch. Thus, the external gear 120 and the second transmission unit 114 form a second vectoring path P2.

In detail, the first transmission gear assembly 124 comprises a first input shaft 1241 having a first input gear 1242 and a second input gear 1243, and a first output shaft 1244 having an output gear 1245. The first input gear 1242 meshes with the internal gear 119 of the differential gear unit 110. The second input gear 1243 meshes with the output gear 1245 of the first output shaft 1244, and the first output shaft 1244 is rotatably coupled to an input member 1261 of the first clutch 126. The first clutch 126 further comprises an output member 1262, wherein the input member 1261 and the output member 1262 are selectively couplable to provide a torque transmission between the input member 1261 and the output member 1262 in the at least partly closed state of the first clutch 126, and to prevent torque transmission between the input member 1261 and the output member 1262 in an open state of the first clutch 126. The output member 1262 is rotatably coupled to the second drive shaft 106.

In other words, in case the first clutch 126 being a multi-disc clutch, the input member 1261 may correspond to an inner disc carrier and the output member 1262 may correspond to an outer disc carrier or vice versa.

Analogously, the second transmission gear assembly 128 comprises a second input shaft 1281 having a first input gear 1282 and a second input gear 1283, and a first output shaft 1284 having an output gear 1285. The first input gear 1282 meshes with the external gear 120 of the differential gear unit 110. The second input gear 1283 meshes with the output gear 1285 of the second output shaft 1284, and the second output shaft 1284 is rotatably coupled to an input member 1301 of the second clutch 130. The second clutch 130 further comprises an output member 1302, wherein the input member 1301 and the output member 1302 are selectively couplable to provide a torque transmission between the input member 1301 and the output member 1302 in the at least partly closed state of the second clutch 130, and to prevent torque transmission between the input member 1301 and the output member 1302 in an open state of the second clutch 130. The output member 1302 is rotatably coupled to the second drive shaft 106. In order to reduce assembly space of the drive train 100, the first input shaft 1241 and the second input shaft 1281 are concentric with each other (see also Figure 3). Furthermore, the first output shaft 1244 and the second output shaft 1284 are concentric with each other, and are additionally concentric with the second drive shaft 106.

In other words, in case the second clutch 130 being a multi-disc clutch, the input member 1301 may correspond to an inner disc carrier and the output member 1302 may correspond to an outer disc carrier or vice versa.

Each of the clutches 126, 130 is actuated by a hydraulically actuated release bearing 1263, 1303. Further, for supporting the load coming from actuation of the clutches 126, 130, an angular contact ball bearing 140, particularly a sealed angular contact ball bearing, is arranged in and constrained to a housing, in Figure 2 exemplarily the housing space 132.

By arranging the first transmission unit 112 and the second transmission unit 114 on the same side of the split axle 102, an asymmetric assembly of the drive train 100 is achieved, which allows providing at least two separate housing spaces, namely a clutch housing space 132 and at least one transmission gear housing space 134, which are fluidly separated from each other. Further, as exemplarily shown in Figure 2, it is possible to divide the transmission gear housing space 134 into at least two transmission gear sub-housing spaces 1341, 1342, which may be fluidly separated from each other. By providing fluidly separated housing spaces 132, 134, it is possible to use different types of pf lubricants in each of the housing spaces 132, 134. Furthermore, it is possible to use dry clutches as the first clutch 126 and the second clutch 130, thereby preventing a drag torque which occurs when using wet clutches.

An operation of the drive train 100 will be explained with regard to Figures 4A to 4C. In case, a substantially equal torque distribution between the first drive shaft 104 and the second drive shaft 106 is required, e.g., while driving straight ahead or when cornering under low speed, no torque-vectoring is required. Therefore, both, the first clutch 126 and the second clutch 130, are in an open state, in which, the clutches 126, 130 do not transmit torque to the second drive shaft 106. Thus, neither the first vectoring path P1 nor the second vectoring path P2 transmits torque to the second drive shaft 106, resulting in the first portion $T_1$ of the input torque $T_{in}$ substantially corresponding to the input torque $T_{in}$. Thus, the first portion $T_1$ of the input torque $T_{in}$ is substantially evenly distributed to the first drive shaft 104 and the second drive shaft 106 via the distribution gear box 116 only.

In case, there is a need to provide more torque to the first drive shaft 104 than to the second drive shaft 106, the first vectoring path P1 is additionally activated (see Figure 4C). This means, the first clutch 126 is in the at least partly closed state thereby transmitting the torque $T_2$' to the second drive shaft 106. In this case, the first portion $T_1$ of the input torque $T_{in}$, which is evenly distributed to the first drive shaft 104 and the second drive shaft 106 by the distribution gear box 116, substantially corresponds to the input torque $T_{in}$ minus the second portion $T_2$ of the input torque $T_{in}$:

$$T_1 = T_{in} - T_2 \qquad\qquad (1)$$

As mentioned above, the second portion $T_2$ is transmitted to the second drive shaft 106 with the first transmission ratio R1 resulting in the torque $T_2$' being actually transmitted to the second drive shaft 106:

$$T_2' = T_2 \times R1 \qquad\qquad (2)$$

Since the first vectoring path P1 comprises one internal gear meshing, namely the internal gear 118 meshing with the first input gear 1242 of the first transmission gear assembly 124, and one external gear meshing, namely the second input gear 1243 of the first transmission gear assembly 124 meshing with the output gear 1245 of the first transmission gear assembly 124, the direction of the second portion $T_2$ of the input torque $T_{in}$ is opposite to the direction of the first portion $T_1$. Thus, the first vectoring path P1 subtracts torque, particularly a torque of the amount of torque $T_2$', from the second drive shaft 106, resulting in that the torque at the second drive shaft 106 is lower than the torque at the first drive shaft 104.

In case, there is a need to provide more torque to the second drive shaft 106 than to the first drive shaft 104, the second vectoring path P2 is additionally activated (see Figure 4B). This means, the second clutch 130 is in the at least partly closed state thereby transmitting the torque $T_3$' to the second drive shaft 106. In this case, the first portion $T_1$ of the input torque $T_{in}$, which is evenly distributed to the first drive shaft 104 and the second drive shaft 106 by the distribution gear box 116, substantially corresponds to the input torque $T_{in}$ minus the third portion $T_3$ of the input torque $T_{in}$:

$$T_1 = T_{in} - T_3 \qquad\qquad (3)$$

As mentioned above, the third portion $T_3$ is transmitted to the second drive shaft 106 with the second transmission ratio R2 resulting in the torque $T_3$' being actually transmitted to the second drive shaft 106:

$$T_3' = T_3 \times R2 \qquad\qquad (4)$$

Since the second vectoring path P2 comprises two external gear meshing, namely the external gear 120 meshing with the first input gear 1282 of the second transmission gear assembly 128, and the second input gear 1283 of the second transmission gear assembly 128 meshing with the output gear 1285 of the second transmission gear assembly 128, the direction of the third portion $T_3$ of the input torque $T_{in}$ is the same as the direction of the first portion $T_1$. Thus, the second vectoring path P2 adds torque, particularly a torque of the amount of torque $T_3$', to the second drive shaft 106, resulting in that the torque at the second drive shaft 106 is higher than the torque at the first drive shaft 104.

Further, as mentioned above, the second drive shaft 106 may be coupled to the intermediate shaft portion 1061 as exemplarily shown in Figures 1, 2 and 4. The intermediate shaft 1061 may also be referred as inner ball joint shaft (IBJ shaft) and has at the outer end an inner ball joint (not shown), to which the second drive shaft 106 is connected. This intermediate shaft portion 1061 has a spline for transmitting the torque from the clutches 126, 130 to the intermediate shaft portion 1061. Thus, the second drive shaft 106 may be a one-piece second drive shaft or may be coupled to the intermediate shaft portion 1061, thereby forming a two-piece second drive shaft.

Other variations to the disclosed examples can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

LIST OF REFERENCE SIGNS

| | |
|---|---|
| 100 | drive train |
| 102 | split drive axle |
| 104 | first drive shaft |
| 106 | second drive shaft |
| 1061 | intermediate shaft |
| 108 | input gear |
| 110 | differential gear unit |
| 112 | first transmission unit |
| 114 | second transmission unit |
| 116 | distribution gear box |
| 118 | internal gear |
| 120 | external gear |
| 122 | housing |
| 124 | first transmission gear assembly |
| 1241 | first input shaft |
| 1242 | first input gear |
| 1243 | second input gear |
| 1244 | first output shaft |
| 1245 | output gear |
| 126 | first clutch |
| 1261 | inner member |
| 1262 | outer member |
| 1263 | release bearing |
| 128 | second transmission gear assembly |
| 1281 | second input shaft |
| 1282 | first input gear |
| 1283 | second input gear |
| 1284 | second output shaft |
| 1285 | output gear |
| 130 | second clutch |
| 1301 | inner member |
| 1302 | outer member |
| 1303 | release bearing |
| 132 | clutch housing space |
| 134 | transmission gear housing space |
| 1341 | transmission gear sub-housing space |
| 1342 | transmission gear sub-housing space |
| 140 | angular contact ball bearing |

| | |
|---|---|
| P1 | first vectoring path |
| P2 | second vectoring path |
| $T_{in}$ | input torque |
| $T_1$ | first portion of input torque |
| $T_2$ | second portion of input torque |
| $T_3$ | third portion of input torque |
| $T_2'$ | torque |
| $T_3'$ | torque |
| R1 | first transmission ratio |
| R2 | second transmission ratio |

**Claims**

1. A drive train (100) for a vehicle, comprising:

a split drive axle (102) having a first drive shaft (104) being couplable to a first wheel and a second drive shaft (106) being couplable to a second wheel,
an input gear (108) being couplable to a drive unit of the vehicle for providing an input torque ($T_{in}$) to a differential gear unit (110),

the differential gear unit (110) being configured to distribute the input torque ($T_{in}$) on the first drive shaft (104) and the second drive shaft (106), the differential gear unit (110) comprising:

a distribution gear box (116) being coupled to the input gear (108) in a torque-transmitting manner and configured to distribute a first portion ($T_1$) of the input torque ($T_{in}$) evenly between the first drive shaft (104) and the second drive shaft (106),
an internal gear (118) being coupled to the input gear (108) in a torque-transmitting manner for providing a second portion ($T_2$) of the input torque ($T_{in}$), and
an external gear (120) being coupled to the input gear (108) in a torque-transmitting manner for providing a third portion ($T_3$) of the input torque ($T_{in}$),

a first transmission unit (112) comprising a first transmission gear assembly (124) and a first clutch (126),

the first transmission gear assembly (124) being configured to connect the internal gear (118) of the differential gear unit (110) and the first clutch (126) in a torque-transmitting manner, and
the first clutch (126) being configured to transmit the second portion ($T_2$) of the input torque ($T_{in}$) to the second drive shaft (106), when being in an at least partly closed state,

a second transmission unit (114) comprising a second transmission gear assembly (128) and a second clutch (130),

the second transmission gear assembly (128) being configured to connect the external gear (120) of the differential gear unit (110) and the second clutch (130) in a torque-transmitting manner, and
the second clutch (130) being configured to transmit the third portion ($T_3$) of the input torque ($T_{in}$) to the second drive shaft (106), when being in an at least partly closed state,

wherein the input torque ($T_{in}$) corresponds to a sum of the first portion ($T_1$) of the input torque ($T_{in}$) and the second portion ($T_2$) of the input torque ($T_{in}$) or a sum of the first portion ($T_1$) of the input torque ($T_{in}$) and the third portion ($T_3$) of the input torque ($T_{in}$),
**characterized in that** the internal gear (118) being integrally formed with the input gear (108) and the external gear (120) being integrally formed with the differential gear box (116).

2. The drive train (100) according to claim 1, the second portion ($T_2$) of the input torque ($T_{in}$) corresponding to a torque in a direction opposite to the direction of first portion ($T_1$) of the input torque ($T_{in}$).

3. The drive train (100) according to claim 1 or 2, the third portion ($T_3$) of the input torque ($T_{in}$) corresponding to a torque in the same direction as the first portion ($T_1$) of the input torque ($T_{in}$).

4. The drive train (100) according to any of claims 1 to 3, further comprising a housing (122) having a clutch housing space (132) for accommodating the first clutch (126) and the second clutch (130), and a transmission gear housing space (134) for accommodating the first transmission gear assembly (124) and the second transmission gear assembly (128), the clutch housing space (132) and the transmission gear housing space (134) being fluidly separated from each other.

5. The drive train (100) according to any of claims 1 to 4, the first clutch (126) and the second clutch (130) each being a dry clutch.

6. The drive train (100) according to any of claims 1 to 5, the first transmission gear assembly (124) comprising a first input shaft (1241) having a first input gear (1242) and a second input gear (1243), and a first output shaft (1244) having an output gear (1245), wherein the first input gear (1242) of the first input shaft (1241) is configured to mesh with the internal gear (118) of the differential gear unit (110), and the second input gear (1243) of the first input shaft (1241) is configured to mesh with the output gear (1245) of the first output shaft (1244).

7. The drive train (100) according to claim 6, the first clutch (126) having an input member (1261) and an output member (1262), the input member (1261) and the output member (1262) being configured to be selectively couplable to provide a torque transmission between the input member (1261) and the output member (1262) in the at least partly closed state of the first clutch (126) and to prevent torque transmission between the input member (1261) and the output member (1262) in an open state of the first clutch (126), wherein the input member (1261) is coupled to the first output shaft (1244), and the output member (1262) is coupled to the second drive shaft (106).

8.  The drive train (100) according to any of claims 1 to 7, the second transmission gear assembly (128) comprising a second input shaft (1281) having a first input gear (1282) and a second input gear (1283), and a second output shaft (1284) having an output gear (1285), wherein the first input gear (1282) of the second input shaft (1281) is configured to mesh with the external gear (120) of the differential gear unit (110), and the second input gear (1283) of the second input shaft (1281) is configured to mesh with the output gear (1285) of the second output shaft (1284).

9.  The drive train (100) according to claim 8, the second clutch (130) having an input member (1301) and an output member (1302), the input member (1301) and the output member (1302) being configured to be selectively couplable to provide a torque transmission between the input member (1301) and the output member (1302) in the at least partly closed state of the second clutch (130) and to prevent torque transmission between the input member (1301) and the output member (1302) in an open state of the second clutch (130), wherein the input member (1301) is coupled to the second output shaft (1284), and the output member (1302) is coupled to the second drive shaft (106).

10. The drive train (100) according to any of claims 1, 8 or 9, the first input shaft (1241) and the second input shaft (1281) being co-axially arranged to each other and/or the first output shaft (1264) and the second output shaft (1284) being co-axially arranged to each other.

11. The drive train (100) according to any of claims 1 to 10, the first clutch (126) and the second clutch (130) being co-axially arranged to each other.

12. The drive train (100) according to any of claims 1 to 11, the second drive shaft (106) is coupled to the differential gear box (116) via an intermediate shaft portion (1061).

13. A vehicle comprising a drive train (100) according to any of claims 1 to 12.

## Patentansprüche

1.  Ein Antriebsstrang (100) für ein Fahrzeug, umfassend:

    eine geteilte Antriebsachse (102) mit einer ersten Antriebswelle (104), die mit einem ersten Rad koppelbar ist, und einer zweiten Antriebswelle (106), die mit einem zweiten Rad koppelbar ist,
    ein Eingangszahnrad (108), das mit einer Antriebseinheit des Fahrzeugs koppelbar ist, um ein Eingangs-drehmoment ($T_{in}$) an eine Differenzialgetriebeeinheit (110) bereitzustellen,
    wobei die Differentialgetriebeeinheit (110) dazu ausgestaltet ist, das Eingangsdrehmoment ($T_{in}$) auf die erste Antriebswelle (104) und die zweite Antriebswelle (106) zu verteilen, wobei die Differentialgetriebeeinheit (110) Folgendes umfasst:

    ein Verteilergetriebe (116), das mit dem Eingangszahnrad (108) in einer Drehmoment übertragenden Weise gekoppelt ist und dazu ausgestaltet ist, einen ersten Teil ($T_1$) des Eingangsdrehmoments ($T_{in}$) gleichmäßig zwischen der ersten Antriebswelle (104) und der zweiten Antriebswelle (106) zu verteilen,
    ein Innenzahnrad (118), das mit dem Eingangszahnrad (108) in einer Drehmoment übertragenden Weise gekoppelt ist, um einen zweiten Teil ($T_2$) des Eingangsdrehmoments ($T_{in}$) bereitzustellen, und
    ein Außenzahnrad (120), das mit dem Eingangszahnrad (108) in einer Drehmoment übertragenden Weise gekoppelt ist, um einen dritten Teil ($T_3$) des Eingangsdrehmoments ($T_{in}$) bereitzustellen,

    eine erste Getriebeeinheit (112), die eine erste Getriebezahnradanordnung (124) und eine erste Kupplung (126) umfasst,

    wobei die erste Getriebezahnradanordnung (124) dazu ausgestaltet ist, das Innenzahnrad (118) der Differentialgetriebeeinheit (110) und die erste Kupplung (126) in einer Drehmoment übertragenden Weise zu verbinden, und
    wobei die erste Kupplung (126) dazu ausgestaltet ist, den zweiten Teil ($T_2$) des Eingangsdrehmoments ($T_{in}$) auf die zweite Antriebswelle (106) zu übertragen, wenn sie sich in einem zumindest teilweise geschlossenen Zustand befindet,

eine zweite Getriebeeinheit (114), die eine zweite Getriebezahnradanordnung (128) und eine zweite Kupplung (130) umfasst,

wobei die zweite Getriebezahnradanordnung (128) dazu ausgestaltet ist, das Außenzahnrad (120) der Differentialgetriebeeinheit (110) und die zweite Kupplung (130) in einer Drehmoment übertragenden Weise zu verbinden, und

wobei die zweite Kupplung (130) dazu ausgestaltet ist, den dritten Teil ($T_3$) des Eingangsdrehmoments ($T_{in}$) auf die zweite Antriebswelle (106) zu übertragen, wenn sie sich in einem zumindest teilweise geschlossenen Zustand befindet,

wobei das Eingangsdrehmoment ($T_{in}$) einer Summe aus dem ersten Teil ($T_1$) des Eingangsdrehmoments ($T_{in}$) und dem zweiten Teil ($T_2$) des Eingangsdrehmoments ($T_{in}$) oder einer Summe aus dem ersten Teil ($T_1$) des Eingangsdrehmoments ($T_{in}$) und dem dritten Teil ($T_3$) des Eingangsdrehmoments ($T_{in}$) entspricht, **dadurch gekennzeichnet, dass** das Innenzahnrad (118) einstückig mit dem Eingangszahnrad (108) und das Außenzahnrad (120) einstückig mit dem Differenzialgetriebe (116) ausgebildet ist.

2. Der Antriebsstrang (100) gemäß Anspruch 1, wobei der zweite Teil ($T_2$) des Eingangsdrehmoments ($T_{in}$) einem Drehmoment in einer Richtung entspricht, die der Richtung des ersten Teils ($T_1$) des Eingangsdrehmoments ($T_{in}$) entgegengesetzt ist.

3. Der Antriebsstrang (100) gemäß Anspruch 1 oder 2, wobei der dritte Teil ($T_3$) des Eingangsdrehmoments ($T_{in}$) einem Drehmoment in der gleichen Richtung wie der erste Teil ($T_1$) des Eingangsdrehmoments ($T_{in}$) entspricht.

4. Der Antriebsstrang (100) gemäß einem der Ansprüche 1 bis 3, der ferner ein Gehäuse (122) mit einem Kupplungsgehäuseraum (132) zur Aufnahme der ersten Kupplung (126) und der zweiten Kupplung (130) und einem Getriebegehäuseraum (134) zur Aufnahme der ersten Getriebezahnradanordnung (124) und der zweiten Getriebezahnradanordnung (128) umfasst, wobei der Kupplungsgehäuseraum (132) und der Getriebegehäuseraum (134) flüssigkeitstechnisch voneinander getrennt sind.

5. Der Antriebsstrang (100) nach einem der Ansprüche 1 bis 4, wobei die erste Kupplung (126) und die zweite Kupplung (130) jeweils eine Trockenkupplung sind.

6. Der Antriebsstrang (100) gemäß einem der Ansprüche 1 bis 5, wobei die erste Getriebezahnradanordnung (124) eine erste Eingangswelle (1241) mit einem ersten Eingangszahnrad (1242) und einem zweiten Eingangszahnrad (1243) und eine erste Ausgangswelle (1244) mit einem Ausgangszahnrad (1245) umfasst, wobei das erste Eingangszahnrad (1242) der ersten Eingangswelle (1241) so ausgestaltet ist, dass es mit dem Innenzahnrad (118) der Differenzialgetriebeeinheit (110) kämmt, und das zweite Eingangszahnrad (1243) der ersten Eingangswelle (1241) so ausgestaltet ist, dass es mit dem Ausgangszahnrad (1245) der ersten Ausgangswelle (1244) kämmt.

7. Der Antriebsstrang (100) gemäß Anspruch 6, wobei die erste Kupplung (126) ein Eingangselement (1261) und ein Ausgangselement (1262) aufweist, wobei das Eingangselement (1261) und das Ausgangselement (1262) so ausgestaltet sind, dass sie selektiv gekoppelt werden können, um im zumindest teilweise geschlossenen Zustand der ersten Kupplung (126) eine Drehmomentübertragung zwischen dem Eingangselement (1261) und dem Ausgangselement (1262) bereitzustellen und in einem offenen Zustand der ersten Kupplung (126) eine Drehmomentübertragung zwischen dem Eingangselement (1261) und dem Ausgangselement (1262) zu verhindern, wobei das Eingangselement (1261) mit der ersten Ausgangswelle (1244) gekoppelt ist und das Ausgangselement (1262) mit der zweiten Antriebswelle (106) gekoppelt ist.

8. Der Antriebsstrang (100) gemäß einem der Ansprüche 1 bis 7, wobei die zweite Getriebezahnradanordnung (128) eine zweite Eingangswelle (1281) mit einem ersten Eingangszahnrad (1282) und einem zweiten Eingangszahnrad (1283) und eine zweite Ausgangswelle (1284) mit einem Ausgangszahnrad (1285) aufweist, wobei das erste Eingangszahnrad (1282) der zweiten Eingangswelle (1281) so ausgestaltet ist, dass es mit dem Außenzahnrad (120) der Differentialgetriebeeinheit (110) kämmt, und das zweite Eingangszahnrad (1283) der zweiten Eingangswelle (1281) so ausgestaltet ist, dass es mit dem Ausgangszahnrad (1285) der zweiten Ausgangswelle (1284) kämmt.

9. Der Antriebsstrang (100) gemäß Anspruch 8, wobei die zweite Kupplung (130) ein Eingangselement (1301) und ein Ausgangselement (1302) aufweist, wobei das Eingangselement (1301) und das Ausgangselement (1302) so ausgestaltet sind, dass sie selektiv gekoppelt werden können, um im zumindest teilweise geschlossenen Zustand der zweiten Kupplung (130) eine Drehmomentübertragung zwischen dem Eingangselement (1301) und dem Ausgangselement (1302) bereitzustellen und in einem offenen Zustand der zweiten Kupplung (130) eine Drehmomentübertragung zwischen dem Eingangselement (1301) und dem Ausgangselement (1302) zu verhindern, wobei das Eingangselement (1301) mit der zweiten Ausgangswelle (1284) gekoppelt ist und das Ausgangselement (1302) mit der zweiten Antriebswelle (106) gekoppelt ist.

10. Der Antriebsstrang (100) gemäß einem der Ansprüche 1, 8 oder 9, wobei die erste Eingangswelle (1241) und die zweite Eingangswelle (1281) koaxial zueinander angeordnet sind und/oder die erste Ausgangswelle (1264) und die zweite Ausgangswelle (1284) koaxial zueinander angeordnet sind.

11. Der Antriebsstrang (100) nach einem der Ansprüche 1 bis 10, wobei die erste Kupplung (126) und die zweite Kupplung (130) koaxial zueinander angeordnet sind.

12. Der Antriebsstrang (100) nach einem der Ansprüche 1 bis 11, wobei die zweite Antriebswelle (106) über einen Zwischenwellenabschnitt (1061) mit dem Differentialgetriebe (116) gekoppelt ist.

13. Ein Fahrzeug, das einen Antriebsstrang (100) gemäß einem der Ansprüche 1 bis 12 umfasst.

**Revendications**

1. Chaîne cinématique (100) pour un véhicule, comprenant :

un demi-essieu moteur (102) ayant un premier arbre d'entraînement (104) pouvant être accouplé à une première roue et un second arbre d'entraînement (106) pouvant être accouplé à une seconde roue,
un engrenage d'entrée (108) pouvant être accouplé à une unité d'entraînement du véhicule pour fournir un couple d'entrée ($T_{in}$) à un bloc d'engrenages différentiels (110),
le bloc d'engrenages différentiels (110) étant configuré pour répartir le couple d'entrée ($T_{in}$) sur le premier arbre d'entraînement (104) et le second arbre d'entraînement (106), le bloc d'engrenages différentiels (110) comprenant :

une boîte d'engrenages de distribution (116) étant accouplée à l'engrenage d'entrée (108) de façon à transmettre un couple et configuré pour répartir une première portion ($T_1$) du couple d'entrée ($T_{in}$) de façon égale entre le premier arbre d'entraînement (104) et le second arbre d'entraînement (106),
un engrenage interne (118) étant accouplé à l'engrenage d'entrée (108) de façon à transmettre un couple pour fournir une deuxième portion ($T_2$) du couple d'entrée ($T_{in}$), et
un engrenage externe (120) accouplé à l'engrenage d'entrée (108) de façon à transmettre un couple pour fournir une troisième portion ($T_3$) du couple d'entrée ($T_{in}$),

un premier bloc de transmission (112) comprenant un premier ensemble d'engrenages de transmission (124) et un premier embrayage (126),

le premier ensemble d'engrenages de transmission (124) étant configuré pour relier l'engrenage interne (118) du bloc d'engrenages différentiels (110) et le premier embrayage (126) de façon à transmettre un couple, et
le premier embrayage (126) étant configuré pour transmettre la deuxième portion ($T_2$) du couple d'entrée ($T_{in}$) au second arbre d'entraînement (106), lorsqu'il est dans un état au moins partiellement fermé,

un second bloc d'engrenages de transmission (114) comprenant un second ensemble d'engrenages de transmission (128) et un second embrayage (130),

le second ensemble d'engrenages de transmission (128) étant configuré pour relier l'engrenage externe (120) du bloc d'engrenages différentiels (110) et le second embrayage (130) de façon à transmettre un couple, et
le second embrayage (130) étant configuré pour transmettre la troisième portion ($T_3$) du couple d'entrée ($T_{in}$) au second arbre d'entraînement (106), lorsqu'il est dans un état au moins partiellement fermé,

dans laquelle le couple d'entrée ($T_{in}$) correspond à une somme de la première portion ($T_1$) du couple d'entrée ($T_{in}$) et de la deuxième portion ($T_2$) du couple d'entrée ($T_{in}$) ou à une somme de la première portion ($T_1$) du couple d'entrée ($T_{in}$) et de la troisième portion ($T_3$) du couple d'entrée ($T_{in}$),

**caractérisée en ce que** l'engrenage interne (118) est formé d'un seul tenant avec l'engrenage d'entrée (108) et l'engrenage externe (120) est formé d'un seul tenant avec la boîte d'engrenages différentiels (116).

2. Chaîne cinématique (100) selon la revendication 1, la seconde portion ($T_2$) du couple d'entrée ($T_{in}$) correspondant à un couple dans une direction opposée à la direction de la première portion ($T_1$) du couple d'entrée ($T_{in}$).

3. Chaîne cinématique (100) selon la revendication 1 ou 2, la troisième portion ($T_3$) du couple d'entrée ($T_{in}$) correspondant à un couple dans la même direction que la première portion ($T_1$) du couple d'entrée ($T_{in}$).

4. Chaîne cinématique (100) selon l'une quelconque des revendications 1 à 3, comprenant en outre un carter (122) comportant un espace de carter d'embrayage (132) pour recevoir le premier embrayage (126) et le second embrayage (130), et un espace de carter d'engrenages de transmission (134) pour recevoir le premier ensemble d'engrenages de transmission (124) et le second ensemble d'engrenages de transmission (128), l'espace de carter d'embrayage (132) et l'espace de carter d'engrenages de transmission (134) étant fluidiquement séparés l'un de l'autre.

5. Chaîne cinématique (100) selon l'une quelconque des revendications 1 à 4, le premier embrayage (126) et le second embrayage (130) étant chacun un embrayage à sec.

6. Chaîne cinématique (100) selon l'une quelconque des revendications 1 à 5, le premier ensemble d'engrenages de transmission (124) comprenant un premier arbre d'entrée (1241) comportant un premier engrenage d'entrée (1242) et un second engrenage d'entrée (1243), et un premier arbre de sortie (1244) comportant un engrenage de sortie (1245), dans lequel le premier engrenage d'entrée (1242) du premier arbre d'entrée (1241) est configuré pour s'engrener avec l'engrenage interne (118) du bloc d'engrenages différentiels (110), et le second engrenage d'entrée (1243) du premier arbre d'entrée (1241) est configuré pour s'engrener avec l'engrenage de sortie (1245) du premier arbre de sortie (1244).

7. Chaîne cinématique (100) selon la revendication 6, le premier embrayage (126) comportant un élément d'entrée (1261) et un élément de sortie (1262), l'élément d'entrée (1261) et l'élément de sortie (1262) étant configurés pour pouvoir être sélectivement accouplés pour permettre une transmission de couple entre l'élément d'entrée (1261) et l'élément de sortie (1262) dans l'état au moins partiellement fermé du premier embrayage (126) et pour empêcher une transmission de couple entre l'élément d'entrée (1261) et l'élément de sortie (1262) dans un état ouvert du premier embrayage (126), dans lequel l'élément d'entrée (1261) est accouplé au premier arbre de sortie (1244), et l'élément de sortie (1262) est accouplé au second arbre d'entraînement (106).

8. Chaîne cinématique (100) selon l'une quelconque des revendications 1 à 7, le second ensemble d'engrenages de transmission (128) comprenant un second arbre d'entrée (1281) comportant un premier engrenage d'entrée (1282) et un second engrenage d'entrée (1283), et un second arbre de sortie (1284) comportant un engrenage de sortie (1285), dans lequel le premier engrenage d'entrée (1282) du second arbre d'entrée (1281) est configuré pour s'engrener avec l'engrenage externe (120) du bloc d'engrenages différentiels (110), et le second engrenage d'entrée (1283) du second arbre d'entrée (1281) est configuré pour s'engrener avec l'engrenage de sortie (1285) du second arbre de sortie (1284).

9. Chaîne cinématique (100) selon la revendication 8, le second embrayage (130) comportant un élément d'entrée (1301) et un élément de sortie (1302), l'élément d'entrée (1301) et l'élément de sortie (1302) étant configurés pour pouvoir être accouplés sélectivement pour permettre une transmission de couple entre l'élément d'entrée (1301) et l'élément de sortie (1302) dans l'état au moins partiellement fermé du second embrayage (130) et pour empêcher la transmission de couple entre l'élément d'entrée (1301) et l'élément de sortie (1302) dans un état ouvert du second embrayage (130), dans lequel l'élément d'entrée (1301) est accouplé au second arbre de sortie (1284), et l'élément de sortie (1302) est accouplé au second arbre d'entraînement (106).

10. Chaîne cinématique (100) selon l'une quelconque des revendications 1, 8 ou 9, le premier arbre d'entrée (1241) et le second arbre d'entrée (1281) étant agencés coaxialement l'un par rapport à l'autre et/ou le premier arbre de sortie (1264) et le second arbre de sortie (1284) étant agencés coaxialement l'un par rapport à l'autre.

**11.** Chaîne cinématique (100) selon l'une quelconque des revendications 1 à 10, le premier embrayage (126) et le second embrayage (130) étant agencés coaxialement l'un par rapport à l'autre.

**12.** Chaîne cinématique (100) selon l'une quelconque des revendications 1 à 11, le second arbre d'entraînement (106) est accouplé à la boîte d'engrenages différentiels (116) via une portion d'arbre intermédiaire (1061).

**13.** Véhicule comprenant une chaîne cinématique (100) selon l'une quelconque des revendications 1 à 12.

Fig. 1

Fig. 3

Fig. 2

EP 4 467 844 B1

16

Fig. 4A

Fig. 4B

Fig. 4C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102015216668 A1

- US 20170211676 A1